# FASCICULE DE BREVET EUROPEEN

(11) **EP 3 027 446 B1**
(45) Date de publication et mention de la délivrance du brevet: **01.04.2020**
(21) Numéro de dépôt: 14742237.2
(22) Date de dépôt: 24.07.2014
(51) Int. Cl.: B60J 7/19, B60J 1/16, B60J 1/18

(54) **DISPOSITIF D'OBTURATION D'UNE BAIE DE VEHICULE AUTOMOBILE A PANNEAU COULISSANT EQUIPEE D'UNE POIGNEE MOBILE EN ROTATION, ET VEHICULE CORRESPONDANT**
SCHLIESSVORRICHTUNG FÜR EIN FAHRZEUGDACH MIT EINER BEWEGLICHEN PLATTE UND EINEM DREHBAREN HEBEL, SOWIE ENTSPRECHENDES FAHRZEUG
CLOSING DEVICE FOR A VEHICLE ROOF WITH A MOVABLE PANEL AND A ROTATING HANDLE, AND CORRESPONDING VEHICLE

(30) Priorité: 02.08.2013 FR 1357716; 19.09.2013 FR 1359008
(43) Date de publication de la demande: 08.06.2016
(73) Titulaire: Advanced Comfort Systems France SAS - ACS France, 79302 Bressuire Cedex (FR)
(72) Inventeur: DEMIGNY, Baptiste, F-22660 Trelevern (FR)
(74) Mandataire: Vidon Brevets & Stratégie
(86) Numéro de dépôt international: PCT/EP2014/065936
(87) Numéro de publication internationale: WO 2015/014712

(56) Documents cités:
- DE-A1- 1 580 603
- FR-A1- 2 937 910
- US-A1- 2012 068 478

## Description

### 1. Domaine de l'invention

Le domaine de l'invention est celui des baies de véhicule automobile. Plus précisément, l'invention concerne les dispositifs d'obturation d'une baie ménagée dans la carrosserie d'un véhicule, et comprenant une partie fixe rapportée de façon affleurante sur la carrosserie, par collage, et une partie mobile coulissante, essentiellement vitrée, susceptible de libérer ou de fermer une ouverture ménagée dans la partie fixe.

En particulier, l'invention concerne une technique améliorée du déverrouillage et de l'ouverture d'un tel dispositif.

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Le document US 2012/068478 A1 décrit un dispositif définissant le domaine de l'invention.

Une autre technique est décrite notamment dans les documents de brevet EP 0 778 168 et EP 0 857 844, au nom du titulaire de la présente demande de brevet. Le dispositif d'obturation présenté dans ces documents (appelé aussi par la suite « baie flush ») comprend une partie fixe comportant une portion vitrée, et une partie mobile essentiellement vitrée par rapport à la partie fixe. La partie mobile est reliée à la partie fixe par des éléments fonctionnels, ou rails, qui permettent la mobilité requise et qui sont rapportés sur la face de la partie fixe tournée vers l'intérieur du véhicule.

Une telle « baie flush » peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP 1 022 172.

Sur le plan esthétique, la « baie flush » présente, vu de l'extérieur, un aspect lisse, affleurant avec la carrosserie (d'où le terme « flush » souvent utilisé dans le domaine), du fait qu'aucun cadre n'est nécessaire entre les bords de la carrosserie et la « baie flush ».

Pour assurer un coulissement du panneau mobile, constitué généralement par un panneau transparent, les moyens fonctionnels comprennent un dispositif de guidage comportant un premier et un second rails de guidage montés fixes sur le panneau fixe de la baie, de part et d'autre de l'ouverture fermée par le panneau mobile. Celui-ci est monté sur les rails, pour coulisser selon une direction longitudinale, dans un plan de coulissement entre une (ou plusieurs) position(s) d'ouverture et une position intermédiaire de dégagement dans laquelle il est en regard de la baie et dégagé de celle-ci.

Selon diverses techniques particulières, des moyens assurent la liaison du panneau mobile avec les rails de guidage de façon à permettre un déplacement transversal du panneau mobile entre sa position intermédiaire de dégagement dans laquelle il est en regard et en retrait transversal de la baie, et sa position d'obturation dans laquelle il est enchâssé dans la baie.

De tels moyens de guidage permettent ainsi à la partie mobile de passer du plan formé par la partie fixe (position d'obturation) à un plan sensiblement parallèle de coulissement, et réciproquement.

Il est également possible de combiner les deux mouvements, sous la forme d'un mouvement louvoyant, selon lequel le bord distal (c'est-à-dire le bord éloigné des moyens de verrouillage, également appelé bord avant) de la partie mobile se trouve, en fin de course, dans le plan de la baie (la partie mobile étant alors « en travers », entre le plan d'obturation et le plan de coulissement). Il suffit alors de ramener, manuellement, le bord proximal (c'est-à-dire le bord proche des moyens de verrouillage, également appelé bord arrière) pour assurer l'obturation.

L'invention se rapporte plus particulièrement à ce type de dispositif d'obturation, à ses variantes et ses perfectionnements.

Plusieurs solutions ont été proposées, notamment par le Demandeur, pour le verrouillage et le déverrouillage de la partie mobile dans la position fermée, et le cas échéant, dans des positions d'ouverture choisies. Elles sont souvent peu ergonomiques et/ou peu pratiques et nécessitent notamment de procéder à un effort, par exemple de serrage ou de rotation pour obtenir le verrouillage et/ou le déverrouillage.

Notamment, les poignées mobiles en rotation présentent l'inconvénient de nécessiter un effort important, en fin de course, du fait notamment que le ou les ressort(s) associé(s) au(x) pêne(s) s'oppose(nt) au déplacement de la poignée.

Un autre inconvénient des techniques connues est que, dans les modes de réalisation prévoyant deux pênes, pour permettre d'effectuer avec une même poignée (ou avec un même ensemble de poignées, dans le cas où deux éléments de poignée sont proposés) les opérations de déverrouillage et de déplacement, il est généralement nécessaire de prévoir des moyens complexes pour l'actionnement, la transmission de l'action vers les pênes, le rappel dans une position de repos,... De plus, le montage, qui suppose de nombreuses pièces, est complexe et peut nécessiter des réglages particuliers.

### 3. Objectifs de l'invention

Il existe donc un besoin d'un mécanisme simple et efficace, pour contrôler le verrouillage et le déverrouillage du panneau mobile d'un dispositif d'obturation d'une baie, qui soit simple, fiable, ergonomique et efficace.

Ainsi, selon un aspect particulier de l'invention, un objectif est également de fournir un tel dispositif, dans lequel l'effort devant être appliqué à la poignée est réduit et optimisé.

L'invention a également pour objectif, selon au moins un mode de réalisation, de fournir un dispositif d'obturation d'une baie qui permette un verrouillage et un déverrouillage, et plus généralement une ouverture et une fermeture, aisés, intuitifs et notamment pouvant être utilisé indifféremment dans les deux sens de rotation.

L'invention a encore pour objectif de fournir un dispositif d'obturation d'une baie qui soit simple à réaliser et à monter sur un véhicule.

Selon au moins certains modes de réalisation, un autre objectif de l'invention est de fournir un dispositif d'obturation d'une baie qui conserve l'ensemble des avantages des "baies flush" déjà développées par le titulaire de la présente demande, et notamment :
- Aspect esthétique affleurant ;
- Aspects aérodynamiques ;
- Facilité et coût réduit de fabrication ;
- Facilité et coût réduit de montage.

Un autre objectif particulier de l'invention est, au moins dans certains modes de réalisation, de fournir un tel dispositif d'obturation qui permette d'obtenir un clair de baie (c'est-à-dire de la surface transparente du véhicule) important, et donc notamment de limiter l'encombrement du cadre du panneau mobile.

### 4. Caractéristiques principales et optionnelles de l'invention

Tout ou partie de ces objectifs, ainsi que d'autres qui apparaîtront par la suite, sont atteints à l'aide d'un dispositif d'obturation d'une baie formée dans un élément de carrosserie d'un véhicule automobile, comprenant une partie fixe et au moins un panneau mobile par rapport à ladite partie fixe, guidé en coulissement par deux rails portés par ladite partie fixe, ledit panneau mobile portant une poignée contrôlant au moins un élément de verrouillage dudit panneau mobile par rapport à ladite partie fixe.

Selon l'invention, ladite poignée est mobile en rotation selon un axe de rotation sensiblement perpendiculairement au plan dudit panneau mobile, contrôlant le déplacement d'une toupie reliée à un câble de déverrouillage, agissant sur le ou lesdits éléments de verrouillage, et des moyens de guidage contrôlent le déplacement de ladite toupie lorsque ladite poignée est déplacée en rotation, de façon que la course de ladite toupie soit sensiblement elliptique.

Cette approche permet d'optimiser la variation du bras de levier en fonction de la rotation de la poignée, et d'offrir en conséquence une ergonomie améliorée, de façon simple et efficace.

Selon un aspect particulier, ladite toupie peut comprendre un pion inférieur guidé dans une première piste sensiblement elliptique formée dans, ou portée par, un élément de cadre dudit panneau mobile.

Selon un autre aspect particulier, ladite toupie peut comprendre un pion supérieur guidé dans une seconde piste formée dans un châssis de poignée solidaire de ladite poignée.

Le guidage de la toupie est ainsi particulièrement simple et efficace.

Selon un mode de réalisation particulier, ladite poignée et ledit châssis de poignée sont formés en une seule pièce.

Ceci permet de simplifier la fabrication et l'assemblage. Bien sûr, il est également possible que ces éléments soient indépendants, et solidarisés l'un à l'autre en rotation.

Dans une variante de mise en œuvre, ladite toupie peut être montée en liaison pivot avec une pièce intermédiaire montée glissante radialement dans ladite poignée.

Selon un aspect particulier, ladite toupie peut présenter une portion centrale maintenant une extrémité dudit câble.

Selon un premier mode de réalisation, ladite première piste s'étend sensiblement sur au moins un premier quart d'ellipse, correspondant sensiblement à un déplacement de 90° de ladite poignée, d'une position de repos vers une position de déverrouillage.

Dans ce cas, ledit premier pion est placé sensiblement sur le grand rayon de ladite ellipse, dans ladite position de repos, et sur le petit rayon dans ladite position de déverrouillage.

Selon un deuxième mode de réalisation, ladite première piste s'étend également sur un second quart d'ellipse, symétrique audit premier quart d'ellipse par rapport au grand rayon de ladite ellipse.

Selon un troisième mode de réalisation, le dispositif comprenant deux éléments de verrouillage, ladite poignée agit simultanément et symétriquement sur deux pions associés chacun respectivement à l'un desdits éléments de verrouillage.

Selon un quatrième mode de réalisation, les deuxième et troisième modes de réalisation sont combinés.

Il est ainsi possible, selon les mises en œuvre, d'agir sur un ou deux éléments de verrouillage, et d'autoriser un ou deux sens de rotation.

Ces éléments de verrouillage peuvent notamment être des pênes, aptes à coopérer avec des gâches prévues à cet effet dans la partie fixe (par exemple dans le rail), ou tout autre élément assurant un verrouillage et un déverrouillage, tel que des navettes, comme illustré dans le document de brevet WO 2010/146185.

Selon un aspect particulier, ladite poignée est maintenue dans la position verrouillée, ou position de repos, par un point dur.

Notamment, une encoche de réception de ladite toupie peut être prévue dans ladite première piste, dans ladite position verrouillée.

Ainsi, la piste n'est pas tout à fait elliptique, au voisinage de la position verrouillée, mais présente une zone de blocage, notamment pour éviter des vibrations de la poignée.

Selon un autre aspect particulier, le dispositif d'obturation peut comprendre des moyens de guidage dudit câble, de façon qu'il s'étende toujours selon la même direction d'un pêne de verrouillage, jusqu'à proximité desdits moyens de guidage de la toupie.

Selon encore un autre aspect particulier, ladite première piste peut être injectée dans le matériau d'un cadre dudit panneau mobile.

La fabrication est ainsi simplifiée.

L'invention concerne également les véhicules automobiles comprenant au moins un dispositif d'obturation tel que décrit ci-dessus.

### 5. Liste des figures

D'autres caractéristiques et avantages de l'invention apparaîtront plus clairement à la lecture de la description suivante d'un mode de réalisation préférentiel, donné à titre d'exemple illustratif non limitatif, et des dessins annexés, parmi lesquels :
- la figure 1 illustre schématiquement une « baie flush » mettant en œuvre l'invention ;
- la figure 2 illustre schématiquement le mécanisme de l'invention, selon un premier mode de réalisation agissant sur un seul pêne et offrant un seul sens de rotation de la poignée ;
- la figure 3 est une vue en coupe simplifiée d'une portion de la figure 2 ;
- la figure 4 est une représentation théorique du mécanisme de la figure 2 ;
- la figure 5 est une courbe illustrant la variations des efforts devant être appliqués sur la poignée en fonction de son angle de rotation ;
- la figure 6 illustre schématiquement un deuxième mode de réalisation de l'invention, selon lequel la poignée peut être déplacée dans les deux sens de rotation ;
- la figure 7 illustre schématiquement un troisième mode de réalisation de l'invention, selon lequel la poignée contrôle simultanément deux pênes ;
- la figure 8 illustre schématiquement un quatrième mode de réalisation de l'invention, selon lequel la poignée peut être déplacée dans les deux sens de rotation et contrôle simultanément deux pênes.

### 6. Exemples de mise en œuvre

### 6.1 présentation générale d'une « baie flush »

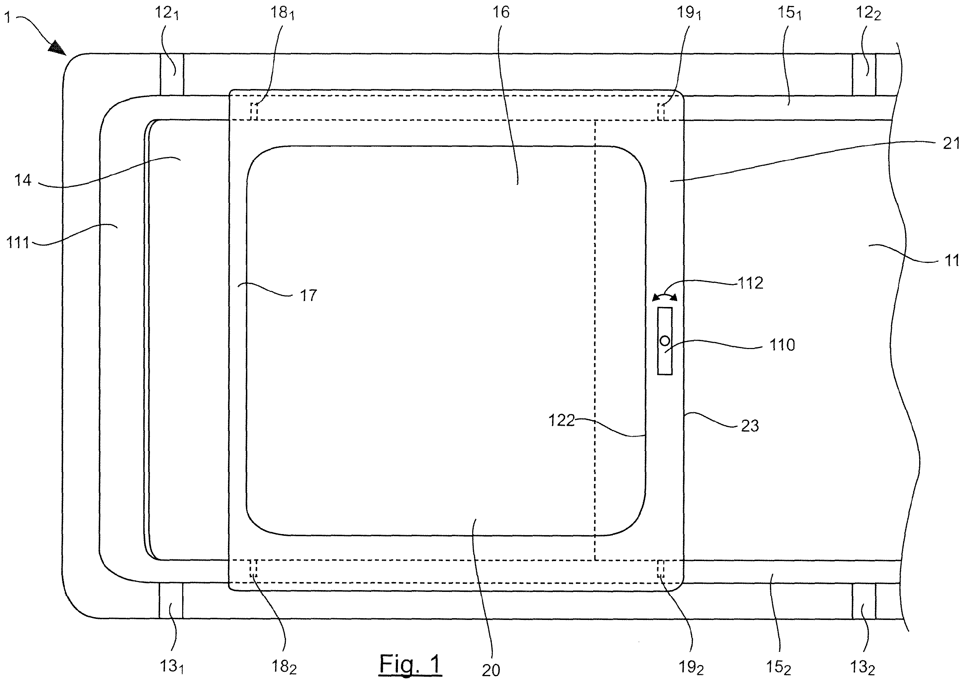

Un exemple de dispositif d'obturation 1 d'une baie formée dans un élément de carrosserie d'un véhicule automobile (ou « baie flush ») conforme à l'invention est illustré schématiquement sur la figure 1.

Une telle « baie flush » comprend tout d'abord une partie fixe 11, par exemple totalement ou essentiellement vitrée. Comme cela apparaît sur la figure 1, qui présente le côté destiné à être orienté vers l'intérieur du véhicule, la périphérie du panneau fixe 11 est libre (à l'exception des éléments 12₁, 12₂, 13₁ et 13₂ dont les fonctions sont rappelées ci-après). Ainsi, le dispositif d'obturation de la figure 1 peut être rapporté directement sur les bords d'une baie définie dans la carrosserie d'un véhicule depuis l'extérieur de celui-ci. Ces bords de la baie sont préférentiellement réalisés avec un léger retrait, correspondant sensiblement à l'épaisseur de la partie fixe 11, pour que celle-ci affleure avec le reste de la carrosserie, lorsqu'elle est montée sur le véhicule.

Notamment, la baie peut être formée dans une paroi latérale du véhicule (par exemple pour les véhicules utilitaires, les monospaces, les breaks,...), dans une paroi orientée vers l'arrière du véhicule (par exemple pour les « pick-up »), ou encore dans une portière (dans ce cas, les bords de la baie peuvent être en partie formés par des éléments de réception s'étendant depuis le caisson de la portière, le dispositif étant alors rapporté sur le bord supérieur du caisson et sur les éléments de réception qui s'étendent de celui-ci).

Un joint, ou cordon, de colle (non représenté) est placé sur le pourtour de la partie fixe, ou sur les bords de la baie de la carrosserie, et la périphérie de la partie fixe 11 est ainsi directement solidarisée par collage, aux bords de la baie, sans qu'il soit nécessaire de prévoir un cadre ou tout autre élément de liaison intermédiaire. Le cordon de colle assure également, avantageusement une fonction d'étanchéité.

Une ouverture 14 est réalisée dans la partie fixe 11. Comme on le voit sur la figure 1, les bords de cette ouverture 14 sont éloignés de la périphérie de la partie fixe 11, pour permettre la solidarisation de celle-ci aux bords de la baie, comme expliqué ci-dessus.

La partie fixe 11 peut être réalisée sous la forme d'un seul élément vitré, en verre ou en plastique adapté à une application à l'automobile, dans lequel est réalisée l'ouverture 14. Par vitré, on entend ici tout matériau apte à laisser passer au moins partiellement la lumière (matériau transparent, translucide, teinté,...).

La partie fixe 11 peut également être réalisée en plusieurs éléments constitutifs, ces éléments pouvant alors définir chacun un ou plusieurs côtés de l'ouverture 14. Une telle approche permet notamment de simplifier la réalisation de l'ouverture 14 dans un panneau de verre. Bien sûr, dans ce cas, les différents éléments constitutifs de la partie fixe se trouvent dans un même plan (qui peut, dans certains cas, être courbe, ou incurvé, dans au moins une dimension, par exemple pour suivre un galbe de la carrosserie). En effet, vue de l'extérieur, la partie fixe doit présenter un aspect lisse, ou affleurant.

La solidarisation de ces différents éléments constitutifs peut se faire par tout moyen adapté, par exemple par collage. Les rails 15₁ et 15₂ peuvent participer à cette solidarisation. Il est possible, sans sortir de l'invention, que l'un des éléments de la partie fixe ne soit pas vitré.

Selon une variante, la partie fixe 11 peut comprendre un élément de support, par exemple en par exemple en matière plastique, définissant notamment la périphérie de la partie fixe, et percée de deux ouvertures, l'une étant fermée de façon définitive par un élément vitré monté fixe, et la seconde correspondant à l'ouverture 14. L'élément de support et l'élément vitré fixe se trouvent dans le même plan, de façon à définir une surface lisse, vue de l'extérieur.

Le dispositif d'obturation comprend encore une partie mobile 16, pouvant venir obturer ou dégager l'ouverture 14. Cette partie mobile 16 comporte une portion vitrée 20, une portion de cadre, notamment un cadre 17 dans l'exemple illustré et un dispositif de verrouillage / déverrouillage. La partie mobile 16 est maintenue et guidée par les deux rails 15₁, 15₂, qui sont montés sur la face de la partie fixe orientée vers l'intérieur de véhicule et éloignés de la périphérie de cette partie fixe, pour les raisons déjà expliquées plus haut.

La partie mobile 16 peut être déplacée (ou se déplacer, si des moyens de motorisation sont prévus) le long des rails 15₁, 15₂, dans un plan de coulissement sensiblement parallèle au plan défini par la partie fixe 11. Ainsi, la partie mobile 16 peut prendre une ou plusieurs positions d'ouverture, selon sa position par rapport aux rails 15₁, 15₂.

Par ailleurs, la partie mobile 16 peut se déplacer perpendiculairement au plan défini par la partie fixe 11, de façon à venir obturer l'ouverture 14, dans une position fermée, dans laquelle elle affleure avec cette partie fixe 11, de façon à proposer un ensemble affleurant (carrosserie, partie fixe et partie mobile).

La face du panneau fixe tournée vers l'intérieur du véhicule porte par ailleurs un joint d'étanchéité (non représenté sur la figure 1) collé sur le contour de l'ouverture 14, dont l'extrémité de la lèvre vient prendre appui sur le panneau mobile 16, lorsque celui-ci est en position d'obturation. Dans une variante, le joint d'étanchéité peut être monté sur le cadre 17, pour venir en contact avec la partie fixe 11.

Le mouvement de la partie mobile 16 par rapport à la partie fixe 11 peut, selon une première approche, se décomposer en deux déplacements indépendants :
- un déplacement perpendiculaire par rapport au plan formé par la partie fixe, permettant le passage d'une position fermée et verrouillée, dans laquelle la partie mobile se trouve dans le même plan que la partie fixe et l'ouverture, à une position de libération, dans laquelle la partie mobile est décalée par rapport à la partie fixe dans un plan de coulissement, de façon à permettre ce coulissement ;
- un déplacement dans le plan de coulissement, parallèle au plan formé par la partie fixe.

D'autres mouvements sont bien sûr possibles. Ainsi, selon une deuxième approche, la partie mobile peut louvoyer, c'est-à-dire suivre une courbe selon laquelle les deux mouvements (verrouillage / déverrouillage et coulissement) sont liés au moment de l'ouverture et de la fermeture.

Les rails 15₁ et 15₂ peuvent être solidarisés à la partie fixe 11 par collage ou par tout autre moyen adapté. Ils peuvent également être directement formés, par exemple par moulage ou surmoulage, sur la partie fixe 11. Ils sont généralement dissimulés, de même que les autres éléments fonctionnels, par de la sérigraphie, empêchant qu'on les voit depuis l'extérieur du véhicule.

Dans certains cas, les rails peuvent être non parallèles.

Par ailleurs, il est important, pour des raisons de sécurité (et en conséquence d'homologation au regard d'aspects réglementaires et/ou législatifs relatifs à la sécurité des véhicules) que les rails 15₁, 15₂ soient solidarisés à la carrosserie, et plus précisément aux bords de la baie. En effet, selon le règlement européen EC43 par exemple, il est imposé que, en cas de bris de verre (en l'occurrence de la partie fixe 11), les éléments susceptibles d'être projetés présentent une taille et/ou un poids inférieur à une limite prédéterminée, fortement dépassée par les rails ou la partie mobile. On comprend cependant, que si rien n'est prévu, en cas de bris de la partie fixe 11, ni les rails 15₁, 15₂ ni le panneau mobile 16, ne seront maintenus. Ils seront donc projetés, et risquent donc de blesser un passager du véhicule ou un passant.

Comme cela a été proposé dans le document de brevet EP 0 778 168, le titulaire de la présente demande a donc proposé d'équiper les rails 15₁, 15₂ de prolongement 12₁, 12₂, 13₁, 13₂, qui s'étendent sur la face tournée vers l'intérieur du véhicule de la partie fixe 11, de façon à être pris en sandwich entre le bord de la partie fixe 11 et le bord correspondant de la baie de la carrosserie.

Ainsi, le cordon de colle solidarisant la partie fixe 11 à la carrosserie solidarise également ces prolongements 12₁, 12₂, 13₁, 13₂ au bord de la carrosserie du véhicule. En conséquence, même lorsque la partie fixe 11 est brisée, et donc absente, les rails 15₁ et 15₂ sont maintenus en place par rapport à la carrosserie à l'aide de ces prolongements. Les rails 15₁ et 15₂ maintiennent quant à eux la partie mobile 16.

Ces prolongements peuvent être formés par moulage directement dans le rail, ou être rapportés sur celui-ci par tout moyen adéquat, par exemple par collage ou clippage.

Le rail inférieur 15₂ porte des prolongements 13₁, 13₂ présentant par ailleurs une ouverture suffisante pour permettre l'évacuation de l'eau recueillie dans le rail 15₂, correspondant par exemple à la condensation dans le véhicule. Cette eau est ainsi simplement et efficacement évacuée à l'extérieur du véhicule, sans que cela ne nuise à l'étanchéité. Les fonctions de maintien en cas de bris et d'évacuation de l'eau, peuvent bien sûr être assurées par des éléments distincts.

Selon le mode de réalisation illustré, les deux rails 15₁ et 15₂ sont formés dans une même pièce comprenant un élément de liaison 111, s'étendant entre les deux rails, le long d'un bord de la partie mobile 16. Cette pièce est collée à la partie fixe 11.

Le cadre 17 s'étend sur la face de la partie mobile 16 orientée vers l'intérieur du véhicule. Ce cadre ne s'étend pas sur l'autre face, de façon à préserver l'aspect affleurant. Dans l'exemple illustré, le cadre 17 entoure la portion vitrée 120 sur la face de la partie mobile orientée vers l'intérieur du véhicule. Le cadre 17 présente une surface principale 21 sensiblement parallèle au plan défini par la portion vitrée 20 et deux bords latéraux 122 et ,23 dont l'un au moins, en l'occurrence le bord latéral 122, relie le cadre 17 à la portion vitrée. Les bords latéraux 122 et 123 sont, dans l'exemple illustré, sensiblement perpendiculaires au plan défini par la portion vitrée 120.

Dans l'exemple illustré, le cadre 17 porte au moins un pion de guidage supérieur 18₁ et un pion de guidage inférieur 18₂ prévus pour être guidés dans une coulisse correspondante formée respectivement dans les rails 15₁ et 15₂.

D'autres pions peuvent être également prévus pour le guidage souhaité.

Dans le mode de réalisation illustré, le guidage est complété par des pions complémentaires 19₁, 19₂ qui assurent simultanément une fonction de pêne, coopérant avec des gâches prévues à cet effet dans les rails 15₁ et 15₂ de façon à verrouiller la partie mobile 16 dans sa position fermée (et le cas échéant dans une ou plusieurs positions d'ouverture prédéterminées, des gâches correspondantes étant alors ménagées dans les rails aux emplacements adéquats).

Selon d'autres modes de réalisation, les pênes assurent uniquement une fonction de verrouillage, en coopérant avec des gâches, prévues dans les rails ou plus généralement sur la partie fixe de la baie flush. Il est également possible qu'un seul pêne soit mis en œuvre, par exemple dans le rail inférieur ou dans le rail supérieur.

Dans tous les cas, une commande du déverrouillage doit être prévue, pour contrôler le déverrouillage du ou des pênes, mettant en œuvre une poignée 110 manipulable par un utilisateur présent dans le véhicule. Préférentiellement, cette poignée permet également de contrôler le déplacement en coulissement du panneau mobile.

Cette poignée peut notamment être prévue sur une partie du cadre du panneau mobile, par exemple une partie verticale de ce cadre.

### 6.2 Commande d'ouverture à piste elliptique

L'invention concerne en particulier cet aspect de commande de l'ouverture et du déverrouillage, et notamment l'actionnement du ou des pênes (selon les modes de réalisation).

Selon l'invention, il est prévu une poignée 110, mobile en rotation (112) selon un axe s'étendant sensiblement perpendiculairement au plan défini par le panneau mobile 16. Selon l'invention, comme détaillé ci-après, l'effort nécessaire que l'utilisateur doit appliquer sur la poignée est optimisé, de façon d'une part à réduire l'effort maximum tout en garantissant une course suffisante pour déverrouiller le ou les pênes, et d'autre part pour offrir un effort dégressif en fin de course (alors que les systèmes classiques nécessitent au contraire un effort plus important en fin de course).

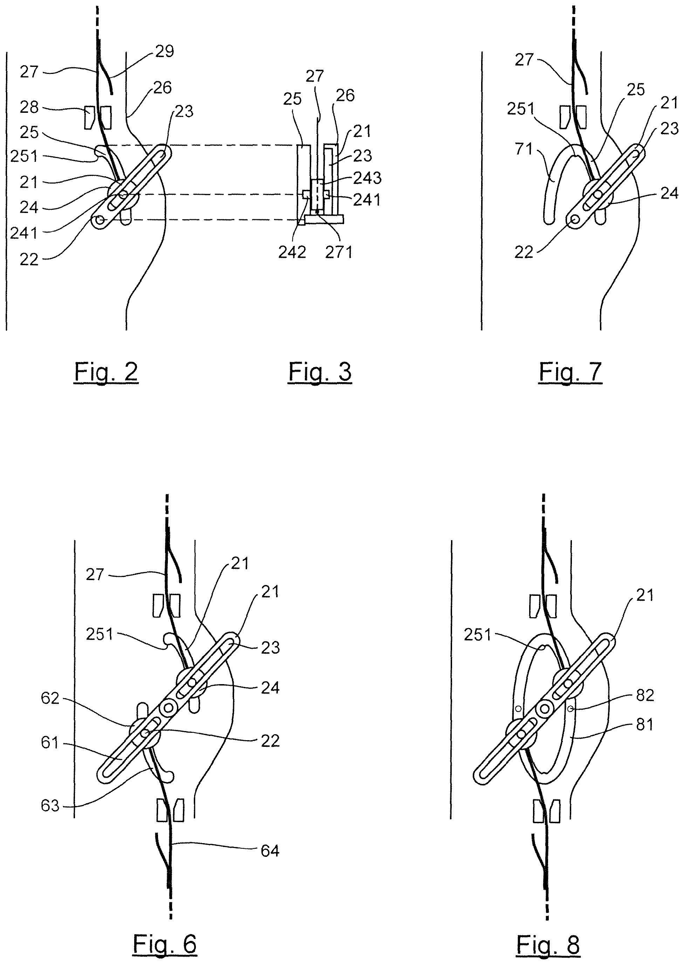

Pour ceci, comme illustré sur la figure 2, le dispositif comprend un châssis de poignée 21, entraîné en rotation par la poignée 110 (non représentée sur cette figure 2). Ce châssis de poignée est monté sur le même axe de rotation 22 que celui de la poignée, et est entraîné par celle-ci. La poignée et le châssis de poignée peuvent être deux éléments distincts, solidarisés l'un à l'autre en rotation, ou être réalisés en une seule pièce.

Le châssis de poignée 21 comprend, selon ce premier de réalisation, une fente ou une lumière de guidage oblongue 23, dans laquelle peut circuler un pion supérieur 241 d'une toupie 24.

Cette toupie présente également un pion inférieur 242, qui est quant à lui guidé dans une piste 25, portée par une portion de cadre 26 du panneau mobile, et par exemple moulé directement dans ce dernier.

La toupie 24 est par ailleurs solidarisée aux câbles 27, permettant l'actionnement du pêne (non représenté).

Comme illustré de façon plus précise sur la vue en coupe de la figure 3, ce câble 27 peut être équipé à son extrémité d'une tête de câble 271, de façon à maintenir ce câble solidarisé au corps central 243 de la toupie 24, qu'il traverse. L'autre extrémité du câble 27 est classiquement reliée au pêne, lui-même classiquement équipé de moyens de rappel tendant à le ramener dans sa position de verrouillage.

Le câble 27 s'étend de façon rectiligne, parallèlement à la portion de cadre 26, entre le pêne et deux parois de guidage 28, placés à proximité de la piste 25. Une lame ressort 29 agit sur cette portion du câble, pour plaquer le câble et le maintenir en tension. D'autres moyens connus peuvent bien sûr être utilisés pour assurer cette tension suffisante du câble.

Entre ces parois 28 et la toupie 24, le câble peut se déplacer, sous l'action combinée du châssis de poignée et de la piste 25.

Selon l'invention, cette piste 25 définit sensiblement une portion d'ellipse, dont le grand rayon s'étend parallèlement à la portion du cadre 26 portant la poignée. Cette piste elliptique 25 guide le pion 242 de la toupie 24. Le châssis de poignée 21 guide le pion 241 dans la lumière oblongue 23. La toupie est donc guidée en translation radiale, via l'action effectuée par l'utilisateur sur la poignée, et transmise au châssis de poignée 21.

La toupie 24 peut par ailleurs tourner sur son axe, pour ne pas contraindre le câble 27 suivant sa position sur la piste elliptique 25.

Les liaisons entre les principales pièces sont donc les suivantes :
- le châssis de poignée est en liaison encastrement avec la poignée 21 ;
- la toupie 24 est en liaison linéaire rectiligne (suivant son axe) par rapport à la fente oblongue 23 du châssis de poignée 21 ;
- la toupie 24 est en liaison appui-plan (de normal son axe) par rapport au châssis de poignée 21 et à la poignée ;
- la toupie 24 est en liaison linéaire rectiligne (suivant son axe) par rapport à la piste elliptique 25 ;
- le câble 27 est en liaison pivot glissant (suivant son axe) par rapport à la toupie 24.

L'assemblage rigide entre le châssis de poignée et la poignée et le faible jeu de fonctionnement permettent de maintenir la toupie verticale suivant toute la rotation.

Ainsi, lorsque l'utilisateur actionne en rotation la poignée, le châssis de poignée 21 est également entrainé en rotation, ce qui autorise une translation radiale de la toupie 24, forçant le pion inférieur 242 à suivre la piste elliptique 25. La toupie 24 tire le câble 27, tout en s'orientant sur son axe suivant l'angle d'effort du câble, de façon à ne pas contraindre fortement ce dernier. Le câble transmet au pêne la force nécessaire pour assurer le déverrouillage (le verrouillage se faisant automatiquement, classiquement, à l'aide de moyens de rappel non représentés, agissant sur le pêne).

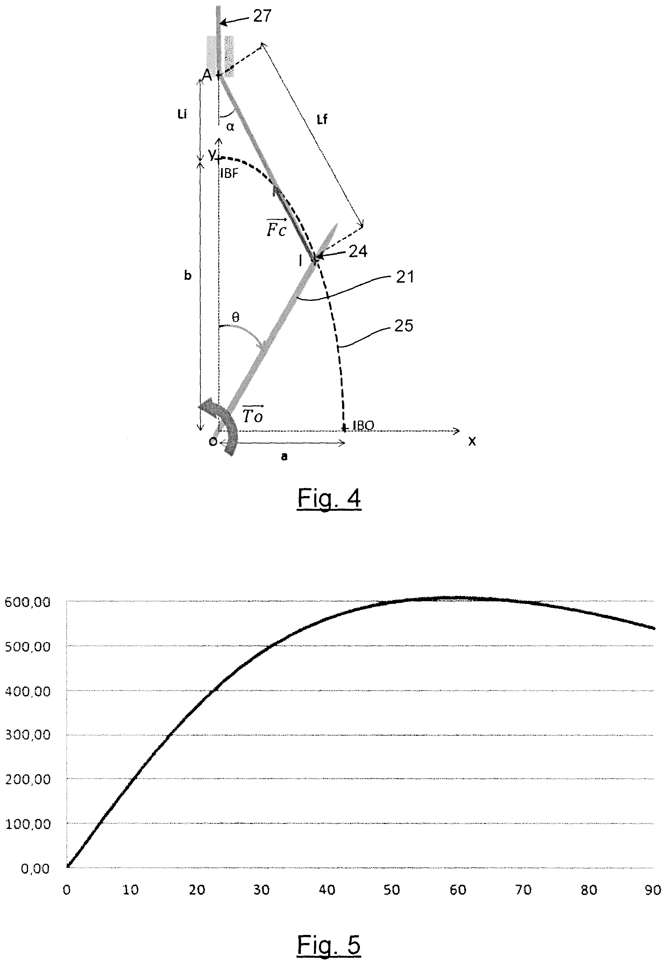

La figure 4 est une représentation théorique du dispositif de la figure 2.

La piste 25 suivant une portion d'ellipse permet une optimisation de la variation du bras de levier entre une position au repos, ou verrouillée, correspondant à un angle θ = 0°, et une position finale où déverrouillée, correspondant à un angle θ = 90°. On constate, sur cette figure 4, que pour une même variation de l'angle θ, l'allongement de la course du câble Lf (longueur de câble entre la tête de câble 271 et les parois 28) ne varie pas linéairement. Au contraire, la course Lf augmente rapidement pour des angles θ de valeurs faibles, puis augmente plus faiblement pour des angles importants, notamment au-delà de 60°.

Cette variation de bras de levier est intéressante, et plus efficace et ergonomique que les systèmes classiques, qui demandent un effort linéairement croissant entre la position verrouillée et la position déverrouillée. Dans ce cas, l'effort s'applique suivant un grand bras de levier lorsque l'effort est de norme minimale, et suivant un petit bras de levier lorsqu'il est de norme maximale. En d'autres termes, l'effort est faible au début de l'ouverture, et augmente en fin de déverrouillage.

En revanche, selon l'invention, l'effort peut être réduit en fin de course, comme ceci est également illustré par la figure 5. Comme on le voit sur cette figure 5, l'effort appliqué par l'utilisateur sur la poignée augmente sensiblement linéairement en début de course, par exemple jusqu'à environ 30°, puis atteint un palier (environ 600 N.mm), par exemple entre 40 et 70°, puis diminue légèrement, jusqu'à l'angle maximum de 90°.

Bien sûr, il est possible de faire évoluer différemment la course du câble, en donc les efforts et les bras de levier, en modifiant notamment les côtes de l'ellipse, et en particulier le grand rayon b et le petit rayon a.

### 6.3 Autres modes de réalisation

L'invention permet bien sûr l'actionnement de deux pênes, placés respectivement en partie supérieure et en partie inférieure du panneau mobile, comme illustré sur la figure 1.

Pour cela, comme illustré par la figure 6, le châssis de poignée 21 comprend une seconde lumière oblongue 61, guidant une autre toupie 62, guidée dans une autre portion d'ellipse 63, symétrique à la portion d'ellipse 25 par rapport à l'axe de rotation 22. Cette toupie 63 agit sur un second câble 64 pour déverrouiller l'autre pêne. Ainsi, le système est symétrique, chaque pêne étant contrôlé de la façon décrite précédemment.

Il est également possible de prévoir une seconde portion d'ellipse 71, pour un même pêne, comme illustré sur la figure 7. Dans ce cas, la poignée peut être déplacée dans les deux sens droite (de 0° à 90°, comme illustré par la figure 2) ou gauche (de 0° à -90°). Ainsi, l'utilisateur peut déplacer la poignée dans un sens ou dans l'autre indifféremment, puisque l'on comprend aisément que le déplacement de la toupie dans la portion de piste 25 ou dans la portion de piste 71 produit exactement le même effet sur le câble 27, et donc sur le pêne correspondant.

Enfin, comme illustré sur la figure 8, il est possible de combiner les aspects des figures 6 et 7, de façon à permettre, via une piste elliptique complète 81, le contrôle de deux pênes indifféremment par rotation de la poignée vers la gauche ou vers la droite. Des butées 82 peuvent être prévues, sur la piste et/ou au niveau de la poignée ou du châssis de poignée, pour limiter le déplacement entre -90° et + 90°.

Ainsi, selon les modes de réalisation, et le nombre de quadrants couverts par la ou les pistes elliptiques, il est possible de répondre à au moins certains des buts suivants :
- réduction de l'effort maximum sur la poignée ;
- agencement optimisé du mécanisme, et notamment de son encombrement ;
- possibilité d'actionnement dans les deux sens de rotation, avec un même sens d'effort sur le câble ;
- possibilité d'actionnement de deux pênes avec une seule rotation de la poignée ;
- transformation efficace d'un effort de rotation en un effort de translation.

Parmi les avantages de l'invention, on peut en particulier noter, selon les modes de réalisation :
- course de câble suffisante, combinée à une réduction de l'effort maximum de l'utilisateur ;
- effort de l'utilisateur dégressif en fin de course ;
- ergonomie utilisateur intuitive : pousser la poignée pour pousser le cadre mobile de la baie (amener en ouverture) et tirer la poignée pour tirer le cadre mobile la baie (amener en fermeture) ;
- optimisation dans la variation du bras de levier entre une position de commande à 0° (câble à la course 0 mm) et la position finale à 90° (câble à la course maximale = fonction des caractéristiques a et b, les rayons définissant l'ellipse).

### 6.4 Variantes et options

La piste 25 peut bien sûr ne pas être une portion parfaite d'ellipse, et une forme légèrement différente peut être envisagée.

Par ailleurs, on peut prévoir que dans la position de repos, ou position verrouillée (angle θ = 0°), une zone de blocage ou de maintien, telle qu'une encoche 251 soit prévue, pour maintenir la toupie 24, via son pion inférieur 242. Cette encoche, par exemple en V, permet de maintenir la poignée de façon stable, formant un point dur permettant notamment d'éviter les vibrations. L'utilisateur a ainsi la compréhension que la baie est bien fermée, par la présence d'un cran. Dans le cas contraire, la poignée ne serait pas maintenue efficacement, le câble ne transmettant aucun couple dans cette position de repos.

Par ailleurs, la toupie peut être en liaison pivot avec une pièce intermédiaire, cette dernière glissant radialement dans la poignée (on obtient en effet les mêmes degrés de liberté).

La présente description de modes de réalisation particuliers prévoit la mise en œuvre de pênes, coopérant avec des gâches. Bien entendu, l'invention peut également s'appliquer au contrôle d'autres éléments de verrouillage du panneau mobile, dès lors qu'ils sont actionnables par câble(s). Il peut notamment s'agir de navettes, telles que décrites dans le document de brevet WO 201014685, et/ou de tout autre élément mobile assurant un verrouillage entre le panneau mobile et la partie fixe.

## Revendications

1. Dispositif d'obturation d'une baie formée dans un élément de carrosserie d'un véhicule automobile, comprenant une partie fixe (11) et au moins un panneau mobile (16) par rapport à ladite partie fixe, guidé en coulissement par deux rails (15₁, 15₂) portés par ladite partie fixe,
ledit panneau mobile (16) portant une poignée (110) contrôlant au moins un élément de verrouillage dudit panneau mobile par rapport à ladite partie fixe, ladite poignée étant mobile en rotation selon un axe de rotation sensiblement perpendiculairement au plan dudit panneau mobile, **caractérisé en ce que** ladite poignée contrôle le déplacement d'une toupie (24, 62) reliée à un câble de déverrouillage, agissant sur le ou lesdits éléments de verrouillage,
des moyens de guidage (21, 63) contrôlant le déplacement de ladite toupie (24, 62) lorsque ladite poignée (110) est déplacée en rotation, de façon que la course de ladite toupie (24, 62) soit sensiblement elliptique.

2. Dispositif d'obturation selon la revendication 1, **caractérisé en ce que** ladite toupie (24) comprend un premier pion (242) guidé dans une première piste (25) sensiblement elliptique formée dans, ou portée par, un élément de cadre dudit panneau mobile.

3. Dispositif d'obturation selon l'une quelconque des revendications 1 et 2, **caractérisé en ce que** ladite toupie (24) comprend un second pion (241) guidé dans une seconde piste (23) formée dans un châssis (21) de poignée solidaire de ladite poignée (110).

4. Dispositif d'obturation selon la revendication 3, **caractérisé en ce que** ladite poignée (110) et ledit châssis (21) de poignée sont formés en une seule pièce.

5. Dispositif d'obturation selon l'une quelconque des revendications 1 et 2, **caractérisé en ce que** ladite toupie (24) est montée en liaison pivot avec une pièce intermédiaire montée glissante radialement dans ladite poignée.

6. Dispositif d'obturation selon l'une quelconque des revendications 1 à 5, **caractérisé en ce que** ladite toupie (24) présente une portion centrale (243) maintenant une extrémité dudit câble (27).

7. Dispositif d'obturation selon l'une quelconque des revendications 2 à 6, **caractérisé en ce que** ladite première piste (25) s'étend sensiblement sur au moins un premier quart d'ellipse, correspondant sensiblement à un déplacement de 90° de ladite poignée, d'une position de repos vers une position de déverrouillage.

8. Dispositif d'obturation selon la revendication 7, **caractérisé en ce que** ledit premier pion (242) est placé sensiblement sur le grand rayon de ladite ellipse, dans ladite position de repos, et sur le petit rayon dans ladite position de déverrouillage.

9. Dispositif d'obturation selon l'une quelconque des revendications 7 et 8, **caractérisé en ce que** ladite première piste (25) s'étend également sur un second quart d'ellipse (71), symétrique audit premier quart d'ellipse par rapport au grand rayon de ladite ellipse.

10. Dispositif d'obturation selon l'une quelconque des revendications 1 à 9, **caractérisé en ce qu'**il comprend deux éléments de verrouillage, et **en ce que** ladite poignée (40) agit simultanément et symétriquement sur deux pions associés chacun respectivement à l'un desdits éléments de verrouillage.

11. Dispositif d'obturation selon l'une quelconque des revendications 1 à 10, **caractérisé en ce que** ladite poignée (110) est maintenue dans la position verrouillée, ou position de repos, par un point dur.

12. Dispositif d'obturation selon les revendications 11 et 2, **caractérisé en ce que** une encoche de réception (251) de ladite toupie est prévue dans ladite première piste, dans ladite position verrouillée.

13. Dispositif d'obturation selon l'une quelconque des revendications 1 à 12, **caractérisé en ce qu'**il comprend des moyens de guidage (29) dudit câble, de façon qu'il s'étende toujours selon la même direction d'un pêne de verrouillage, jusqu'à proximité desdits moyens de guidage de la toupie.

14. Dispositif d'obturation selon l'une quelconque des revendications 2 à 13, **caractérisé en ce que** ladite première piste (25) est injectée dans le matériau d'un cadre dudit panneau mobile.

15. Véhicule automobile comprenant au moins un dispositif d'obturation selon l'une quelconque des revendications précédentes.

## Patentansprüche

1. Vorrichtung zum Schließen eine Öffnung, die in einem Karosserieelement eines Kraftfahrzeugs ausgebildet ist, umfassend einen festen Teil (11) und mindestens eine in Bezug zum festen Teil bewegliche Platte (16), die von zwei Schienen (15₁, 15₂), die vom festen Teil getragen werden, gleitend geführt wird,
wobei die bewegliche Platte (16) einen Griff (110) trägt, der mindestens ein Verriegelungselement der beweglichen Platte in Bezug zum festen Teil steuert, wobei der Griff um eine Drehachse, die im Wesentlichen senkrecht auf die Ebene der beweglichen Platte ist, drehbeweglich ist, **dadurch gekennzeichnet, dass** der Griff die Verlagerung eines Kreisels (24, 62) steuert, der mit einem Entriegelungsseil verbunden ist, das auf das oder die Verriegelungselemente einwirkt,
wobei die Führungsmittel (21, 63) die Verlagerung des Kreisels (24, 62) steuern, wenn der Griff (110) in Drehung verlagert wird, so dass der Weg des Kreisels (24, 62) im Wesentlichen elliptisch ist.

2. Schließvorrichtung nach Anspruch 1, **dadurch gekennzeichnet, dass** der Kreisel (24) einen ersten Stift (242) umfasst, der in einer ersten im Wesentlichen elliptischen Spur (25) geführt ist, die in einem Rahmenelement der beweglichen Platte ausgebildet ist oder von diesem getragen wird.

3. Schließvorrichtung nach einem der Ansprüche 1 und 2, **dadurch gekennzeichnet, dass** der Kreisel (24) einen zweiten Stift (241) umfasst, der in einer zweiten Spur (23) geführt ist, die in einem Griffsockel (21) ausgebildet ist, der mit dem Griff (110) verbunden ist.

4. Schließvorrichtung nach Anspruch 3, **dadurch gekennzeichnet, dass** der Griff (110) und der Griffsockel (21) aus einem Stück hergestellt sind.

5. Schließvorrichtung nach einem der Ansprüche 1 und 2, **dadurch gekennzeichnet, dass** der Kreisel (24) in Schwenkverbindung mit einem Zwischenstück montiert ist, das radial gleitend in dem Griff montiert ist.

6. Schließvorrichtung nach einem der Ansprüche 1 bis 5, **dadurch gekennzeichnet, dass** der Kreisel (24) einen zentralen Abschnitt (243) aufweist, der ein Ende des Seils (27) hält.

7. Schließvorrichtung nach einem der Ansprüche 2 bis 6, **dadurch gekennzeichnet, dass** sich die erste Spur (25) im Wesentlichen auf mindestens einem Ellipsenviertel erstreckt, das im Wesentlichen einer Verlagerung des Griffs um 90° von einer Ruheposition in eine Entriegelungsposition entspricht.

8. Schließvorrichtung nach Anspruch 7, **dadurch gekennzeichnet, dass** der erste Stift (242) im Wesentlichen auf dem großen Radius der Ellipse in der Ruheposition und auf dem kleinen Radius in der Entriegelungsposition angeordnet ist.

9. Schließvorrichtung nach einem der Ansprüche 7 und 8, **dadurch gekennzeichnet, dass** sich die erste Spur (25) auch auf einem zweiten Ellipsenviertel (71) erstreckt, das zum ersten Ellipsenviertel in Bezug zum großen Radius der Ellipse symmetrisch ist.

10. Schließvorrichtung nach einem der Ansprüche 1 bis 9, **dadurch gekennzeichnet, dass** sie zwei Verriegelungselemente umfasst, und dass der Griff (40) gleichzeitig und symmetrisch auf zwei Stifte einwirkt, die jeweils einem der Verriegelungselemente zugeordnet sind.

11. Schließvorrichtung nach einem der Ansprüche 1 bis 10, **dadurch gekennzeichnet, dass** der Griff (110) in der verriegelten Position oder Ruheposition durch einen Druckpunkt gehalten wird.

12. Schließvorrichtung nach den Ansprüchen 11 und 2, **dadurch gekennzeichnet, dass** eine Aufnahmekerbe (251) des Kreisels in der ersten Spur in der verriegelten Position vorgesehen ist.

13. Schließvorrichtung nach einem der Ansprüche 1 bis 12, **dadurch gekennzeichnet, dass** sie Führungsmittel (29) des Seils umfasst, so dass es sich immer in dieselbe Richtung eines Riegels bis in die Nähe der Führungsmittel des Kreisels erstreckt.

14. Schließvorrichtung nach einem der Ansprüche 2 bis 13, **dadurch gekennzeichnet, dass** die erste Spur (25) in das Material eines Rahmens der beweglichen Platte injiziert wird.

15. Kraftfahrzeug, umfassend mindestens eine Schließvorrichtung nach einem der vorhergehenden Ansprüche.

## Claims

1. Device for closing off a bay formed in a bodywork element of a motor vehicle, comprising a fixed portion (11) and at least one movable panel (16) relative to said fixed portion, guided in sliding by two rails (15₁, 15₂) carried by said fixed portion,
said movable panel (16) carrying a handle (110) controlling at least one element for locking said movable panel relative to said fixed portion,
said handle being movable in rotation about a rotation axis substantially perpendicularly to the plane of said movable panel, **characterised in that** said handle controls the movement of a spinning top (24, 62) connected to an unlocking cable, acting on said locking element(s),
guide means (21, 63) controlling the movement of said spinning top (24, 62) when said handle (110) is moved in rotation so that the path of said spinning top (24, 62) is substantially elliptical.

2. Device for closing off according to claim 1, **characterised in that** said spinning top (24) comprises a first pin (242) guided in a first substantially elliptical track (25) formed in, or carried by, a frame element of said movable panel.

3. Device for closing off according to either claim 1 or claim 2, **characterised in that** said spinning top (24) comprises a second pin (241) guided in a second track (23) formed in a handle frame (21) fixedly joined to the handle (110) .

4. Device for closing off according to claim 3, **characterised in that** said handle (110) and said handle frame (21) are formed in one piece.

5. Device for closing off according to either claim 1 or 2, **characterised in that** said spinning top (24) is mounted in pivoting link with an intermediate component mounted radially slidably in said handle.

6. Device for closing off according to any one of claims 1 to 5, **characterised in that** said spinning top (24) has a central portion (243) holding one end of said cable (27).

7. Device for closing off according to any one of claims 2 to 6, **characterised in that** said first track (25) extends substantially over at least a first quarter-ellipse, corresponding substantially to a movement of 90° of said handle, from a rest position to an unlocking position.

8. Device for closing off according to claim 7, **characterised in that** said first pin (242) is placed substantially on the large radius of said ellipse, in said rest position, and on the small radius in said unlocking position.

9. Device for closing off according to either claim 7 or claim 8, **characterised in that** said first track (25) also extends over a second quarter-ellipse (71), symmetrical to said first quarter-ellipse relative to the large radius of said ellipse.

10. Device for closing off according to any one of claims 1 to 9, **characterised in that** it comprises two locking elements, and **in that** said handle (40) acts simultaneously and symmetrically on two pins each associated respectively with one of the locking elements.

11. Device for closing off according to any one of claims 1 to 10, **characterised in that** said handle (110) is fixed in the locked position, or rest position, by a hard spot.

12. Device for closing off according to claims 11 and 2, **characterised in that** a notch (251) for receiving said spinning top is provided in the first track, in said locked position.

13. Device for closing off according to any one of claims 1 to 12, **characterised in that** it comprises means (29) for guiding said cable so that it always extends in the same direction of a locking bolt as far as a location near the guiding means of said spinning top.

14. Device for closing off according to any one of claims 2 to 13, **characterised in that** said first track (25) is injected into the material of a frame of said movable panel.

15. Motor vehicle comprising at least one device for closing according to any one of the preceding claims.
